(19) **Europäisches Patentamt**
**European Patent Office**
**Office européen des brevets**

(11) **EP 3 423 293 B1**

(12) **FASCICULE DE BREVET EUROPEEN**

(45) Date de publication et mention de la délivrance du brevet:
**25.12.2019 Bulletin 2019/52**

(21) Numéro de dépôt: **17710348.8**

(22) Date de dépôt: **23.02.2017**

(51) Int Cl.:
**B60C 9/22** (2006.01)     **B60C 9/20** (2006.01)

(86) Numéro de dépôt international:
**PCT/FR2017/050397**

(87) Numéro de publication internationale:
**WO 2017/149223 (08.09.2017 Gazette 2017/36)**

(54) **ARMATURE DE SOMMET DE PNEUMATIQUE CONSTITUEE DE DEUX COUCHES DE SOMMET DE TRAVAIL ET D'UNE COUCHE D'ELEMENTS DE RENFORCEMENT CIRCONFERENTIELS**

GÜRTELS EINES LUFTREIFENS BESTEHEND AUS ZWEI GENEIGTEN GÜRTELLAGEN UND EINER LAGE AUS DIE UMFANGSRICHTUNG UMLAUFENDEN VERSTÄRKUNGSELEMENTEN

REINFORCEMENT FOR CROWN OF PNEUMATIC TIRE, COMPOSED OF TWO CROSSED BELT LAYERS AND ONE LAYER OF CIRCUMFERENTIAL REINFORCEMENT ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2016 FR 1651771**

(43) Date de publication de la demande:
**09.01.2019 Bulletin 2019/02**

(73) Titulaire: **Compagnie Générale des Etablissements Michelin**
**63000 Clermont-Ferrand (FR)**

(72) Inventeurs:
• **FOURNIER, Orel**
**63040 Clermont-Ferrand Cedex 9 (FR)**

• **DAYET, Patrick**
**63040 Clermont-Ferrand Cedex 9 (FR)**

(74) Mandataire: **Le Cam, Stéphane Georges Elie Manufacture Française des Pneumatiques Michelin CBS/CORP/J/PI - F35 - Ladoux 23, place des Carmes-Déchaux 63040 Clermont-Ferrand Cedex 9 (FR)**

(56) Documents cités:
**DE-A1-102010 000 471     JP-B2- 5 795 573 US-A- 3 557 858**

**Description**

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques faisant avec la direction circonférentielle un angle compris entre 45° et 90°, cette nappe, dite de triangulation, étant radialement située entre l'armature de carcasse et la première nappe de sommet dite de travail, formée de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Par ailleurs, l'usage de pneumatiques sur des véhicules pour poids-lourds de type « approche chantier » conduit les pneumatiques à subir des chocs lors de roulages sur des sols caillouteux. Ces chocs sont bien entendu néfastes quant aux performances en termes d'endurance.

Il est encore connu de l'homme du métier d'augmenter le nombre de nappes constituant l'armature sommet pour améliorer l'endurance du pneumatique à l'égard de tels chocs.

Le document DE 102010000471-A1 montre un pneu comprenant une armature de sommet avec deux couches de sommet de travail croisées et une couche d'éléments de renforcement circonférentiels.

Quelles que soient l'une de ces solutions telles que présentées précédemment, la présence d'une ou plusieurs couches d'éléments de renforcement supplémentaire conduit à une masse plus importante du pneumatique et à des coûts de fabrication des pneumatiques plus importants.

Un but de l'invention est de fournir des pneumatiques pour véhicules "Poids-Lourds", par exemple de type « approche chantier », dont les performances d'endurance sont conservées voire améliorées notamment au regard des chocs subis sur la bande de roulement et dont la masse globale est diminuée.

Ce but est atteint selon l'invention par un pneumatique pour véhicule de type poids lourd, dont la pression de gonflage P est supérieure ou égale à 6.5 bars, à armature de carcasse radiale, comprenant une armature de sommet comprenant deux couches de sommet de travail d'éléments de renforcement croisés d'une nappe à l'autre en faisant avec la direction circonférentielle des angles ($\alpha$1, $\alpha$2) supérieurs à 8°, lesdits angles $\alpha$1 et $\alpha$2 étant orientés de part et d'autre de la direction circonférentielle, et au moins une couche d'éléments de renforcement circonférentiels, l'armature de sommet étant coiffée radialement d'une bande de roulement, ladite bande de roulement étant réunie à deux bourrelets par l'intermédiaire de deux flancs, les deux couches de sommet de travail et ladite au moins une couche d'éléments de renforcement circonférentiels étant seules présentes pour constituer l'armature de sommet sur au moins 40% de la largeur axiale de l'armature sommet, les éléments de renforcement de la couche de travail radialement la plus extérieure formant un angle $\alpha$2 avec la direction circonférentielle supérieur en valeur absolue à l'angle $\alpha$1 formé par les éléments de renforcement de la couche de travail radialement la plus intérieure avec la direction circonférentielle, la valeur absolue de la différence entre les valeurs absolues des angles $\alpha$2 et $\alpha$1 étant supérieure à 12°, l'angle moyen $\alpha$ satisfaisant la relation :

$$14+131*\exp(-L/100) < \alpha < 28+110*\exp(-L/100)$$

$\alpha$ étant défini par la relation Arctan$((\tan(|\alpha1|)*\tan(|\alpha2|))^{1/2})$, L étant la largeur maximum du pneumatique mesurée selon la direction axiale et exprimée en mm, le ratio d'utilisation du potentiel de rupture F2/FR2 de la couche de travail radialement la plus extérieure étant inférieur à 1/6, dans lequel :

FR2 est la force rupture en extension uniaxiale des câbles de la couche de travail radialement la plus extérieure,

$$F2 = p_2 * Tc * [(\tan(|\alpha1|)/(\tan(|\alpha1|)+\tan(|\alpha2|))) / \cos^2(|\alpha2|) + C],$$

avec

$$Tc = 0.078 * P * Rs * (1-(Rs^2-R_L^2)/(2*Rt*Rs)),$$

$$C = 0.00035*(\min((L-80) / \sin(|\alpha1|), (L-80) / \sin(|\alpha2|), 480)-480),$$

$p_2$ : le pas de pose des éléments de renforcement de la couche de sommet de travail radialement la plus extérieure, mesuré perpendiculairement aux éléments de renforcement au niveau du plan médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,

Es : distance radiale entre le point radialement le plus à l'extérieur du pneumatique et sa projection orthogonale sur la face radialement extérieure d'un élément de renforcement de la couche de sommet de travail radialement la plus intérieure,

$R_L$ : moyenne des rayons des points axialement les plus à l'extérieur de chaque côté du pneumatique,

Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur axiale de la bande de roulement.

La largeur L et les différents rayons sont mesurés sur un pneumatique monté sur sa jante nominale et gonflé à sa pression nominale, et sont exprimés en millimètres.

L'épaisseur Es et le pas $p_2$ sont mesurés sur une coupe du pneumatique et sont exprimés en millimètres.

Les angles $\alpha 1$ et $\alpha 2$, exprimés en degré, sont également mesurés sur une coupe du pneumatique. Les mesures d'angles sont selon l'invention réalisées au niveau du plan médian circonférentiel.

De préférence selon l'invention, ladite au moins une couche d'éléments de renforcement circonférentiels est continue axialement et de préférence encore centrée sur le plan médian circonférentiel.

De préférence selon l'invention, les éléments de renforcement desdites deux couches de sommet de travail sont métalliques.

Les résultats obtenus avec des pneumatiques conformes à l'invention ont effectivement mis en évidence que les performances en termes d'endurance peuvent être améliorées notamment lors de roulage sur sol caillouteux, l'armature sommet du pneumatique étant allégée. L'allègement de l'armature sommet du pneumatique s'accompagne d'une simplification de fabrication et d'une diminution des coûts de fabrication.

Contre toute attente, les résultats ont effectivement mis en évidence que les pneumatiques selon l'invention peuvent être allégés en diminuant le nombre de couches constitutives de l'armature sommet, notamment par la suppression de la couche de protection, tout en conservant voire améliorant les propriétés d'endurance du sommet du pneumatique notamment à l'égard de chocs apparaissant sur la bande de roulement par exemple lors de roulage sur sol caillouteux. Il est en effet connu de l'homme du métier que pour améliorer les performances d'endurance de l'armature sommet d'un pneumatique à l'égard de ce type de chocs, il est usuel d'augmenter le nombre de couches d'éléments de renforcement.

Les inventeurs pensent interpréter ces résultats du fait de l'angle formé avec la direction circonférentielle par les éléments de renforcement de la couche de sommet de travail radialement la plus intérieure qui est plus petit en valeur absolue que celui formé par les éléments de renforcement de la couche de sommet de travail radialement la plus extérieure. Ils ont constaté que cet angle plus petit semble entraîner un retard dans la prise de tension par les éléments de renforcement lors d'un tel choc. Usuellement, lors de chocs comparables à ceux observés lors d'un roulage sur sol caillouteux la rupture d'éléments de renforcement si elle intervient s'observe sur la couche radialement la plus intérieure. Ces constats semblent indiquer que face à ce type d'agressions, la différence d'angles des éléments de renforcement entre les deux couches de sommet de travail permet d'améliorer les performances d'endurance du pneumatique tout en diminuant le nombre de couches de l'armature de sommet.

Les inventeurs ont encore fait le constat que le choix de la valeur absolue de la différence entre les valeurs absolues des angles précités $\alpha 1$ et $\alpha 2$ associée à l'angle moyen $\alpha$, au ratio d'utilisation du potentiel de rupture F2/FR2 et à la présence d'une couche d'éléments de renforcement circonférentiels tels que définis selon l'invention peuvent permettre d'éliminer la couche de protection usuellement mise en place radialement à l'extérieur des autres couches de l'armature de sommet. Une telle couche est habituellement présente pour être sacrifiée en cas d'agressions du pneumatique de type coupures pouvant venir altérer l'intégrité d'éléments de renforcement métalliques par des phénomènes de corrosion associés à la fatigue desdits éléments de renforcement. Les inventeurs font effectivement le constat que les éléments de renforcement de la couche de sommet de travail radialement la plus extérieure, d'un pneumatique selon l'invention, sont moins sollicités lors du gonflage du pneumatique ou bien lors de son utilisation en roulage normal que les éléments de renforcement d'une couche de sommet de travail radialement la plus extérieure d'un pneumatique plus usuel ; un tel pneumatique plus usuel présente des différences d'angles en valeur absolue entre les éléments de renforcement des différentes couches de travail plus petites, un angle des éléments de renforcement de la couche de travail radialement la plus intérieure supérieur ou égal en valeur absolue à celui des éléments de renforcement de la couche de travail radialement la plus extérieure et un ratio d'utilisation du potentiel de rupture F2/FR2 plus important. Les éléments de renforcement de la couche de sommet de travail radialement la plus extérieure d'un pneumatique selon l'invention présentent ainsi des propriétés d'endurance bien supérieures à ceux d'un pneumatique plus usuel, notamment du fait de l'angle des éléments de renforcement de la couche de travail radialement la plus extérieure particulièrement élevé et de la présence de ladite au moins une couche d'éléments de renforcement circonférentiels ; les inventeurs font ainsi le constat que la suppression de la couche de protection est rendue possible et permet de contribuer à l'allègement du pneumatique. En outre, la présence de ladite au moins une couche d'éléments de renforcement circonférentiels autorise un angle moyen α des éléments de renforcements des deux couches de sommet de travail supérieur à l'angle moyen défini par les éléments de renforcements des deux couches de sommet de travail dans les pneumatiques plus usuels. En effet, la rigidité circonférentielle apporté par la présence de ladite au moins une couche d'éléments de renforcement circonférentiels permet d'augmenter les angles formés par les éléments de renforcement de chacune des couches de sommet de travail avec la direction circonférentielle, lesdits angles semblant ainsi favoriser le fonctionnement du pneumatique et notamment sa manœuvrabilité lors de roulages sous fortes charges ou bien avec un angle formé avec la direction d'avancement très important. Les inventeurs ont ainsi su mettre en évidence que les propriétés dynamiques du pneumatique, notamment la rigidité de dérive, sont conservées voire améliorées quel que soit l'usage.

Selon un mode de réalisation préféré de l'invention, la valeur absolue de la différence entre les valeurs absolues des angles α2 et α1 est supérieure à 15°. Selon ce mode de réalisation, et conformément aux interprétations données ci-dessus, il va être possible d'améliorer encore les performances d'endurance des éléments de renforcement de la couche de travail radialement la plus extérieure et/ou améliorer encore les performances du pneumatique à l'égard de chocs tels que ceux subis lors de roulage sur des sols caillouteux.

De préférence encore selon l'invention pour améliorer encore les performances du pneumatique à l'égard de chocs tels que ceux subis lors de roulage sur des sols caillouteux, l'angle moyen α satisfait la relation : α > 20+164*exp(-L/100).

Avantageusement encore selon l'invention, le ratio d'utilisation du potentiel de rupture F2/FR2 de la couche de travail radialement la plus extérieure est inférieur à 1/8. Un tel ratio d'utilisation du potentiel de rupture F2/FR2 contribue encore à améliorer les performances d'endurance des éléments de renforcement de la couche de travail radialement la plus extérieure lors de l'utilisation du pneumatique.

De préférence selon l'invention, le ratio d'utilisation du potentiel de rupture F1/FR1 de la couche de travail radialement la plus intérieure est inférieur à 1/3, dans lequel :

$$F1 = p_1 * Tc * [(\tan(|\alpha2|)/(\tan(|\alpha1|)+\tan(|\alpha2|))) / \cos^2(|\alpha1|) + C],$$

avec

$p_1$ : le pas de pose des éléments de renforcement de la couche de sommet de travail radialement la plus intérieure, mesuré perpendiculairement aux éléments de renforcement au niveau du plan médian circonférentiel.

De préférence encore, le ratio d'utilisation du potentiel de rupture F1/FR1 de la couche de travail radialement la plus intérieure est au moins 30 % supérieur au ratio d'utilisation du potentiel de rupture F2/FR2 de la couche de travail radialement la plus extérieure.

Selon une variante avantageuse de réalisation de l'invention, ladite au moins une couche d'éléments de renforcement circonférentiels présente une largeur axiale supérieure à 0.5xL.

L est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, les deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préférée de l'invention, ladite au moins une couche d'éléments de renforcement circonférentiels est radialement disposée entre deux couches de sommet de travail.

Selon ce mode de réalisation de l'invention, ladite au moins une couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à ladite au moins une couche d'éléments de renforcement circonférentiels sont supérieures à la largeur axiale de ladite au moins une couche d'éléments de renforcement circonférentiels et de préférence, lesdites couches de sommet de travail adjacentes à ladite au moins une couche d'éléments de renforcement circonférentiels sont de part et d'autre du plan équatorial et dans le prolongement axial immédiat de ladite au moins une couche d'éléments de renforcement circonférentiels couplées sur une largeur axiale, pour être ensuite découplées par une couche de mélange de caoutchouc au moins sur le restant de la largeur commune aux dites deux couches de travail.

La présence de tels couplages entre les couches de sommet de travail adjacentes à ladite au moins une couche d'éléments de renforcement circonférentiels permettent la diminution des contraintes de tension agissant sur les éléments circonférentiels axialement le plus à l'extérieur et situé le plus près du couplage.

Selon un mode de réalisation avantageux de l'invention, les éléments de renforcement de ladite au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements de ladite au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport $a/\lambda$ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Selon un mode de réalisation de l'invention, les éléments de renforcement des couches de sommet de travail sont des câbles métalliques inextensibles.

Selon un mode de réalisation avantageux de l'invention, les deux couches de sommet de travail et ladite au moins une couche d'éléments de renforcement circonférentiels sont seules présentes pour constituer l'armature de sommet sur au moins 60% de la largeur axiale de l'armature sommet et avantageusement encore sur au moins 80% de la largeur axiale de l'armature sommet. Ces modes de réalisations avantageux de l'invention vont dans le sens d'un allègement encore plus important du pneumatique.

Selon un mode de réalisation préféré de l'invention, optimisant l'allègement du pneumatique, les deux couches de sommet de travail et ladite au moins une couche d'éléments de renforcement circonférentiels sont seules présentes pour constituer l'armature de sommet sur la totalité de la largeur axiale de l'armature sommet.

Selon d'autres variantes de réalisation de l'invention décalant le compromis de performance du pneumatique de façon moins favorable pour ce qui concerne l'allègement, l'armature de sommet comporte une couche supplémentaire, dite de protection, radialement extérieure aux couches de sommet de travail, de préférence centrée sur le plan médian circonférentiel. Les éléments de renforcements d'un telle couche de protection sont de préférence des éléments de renforcement dits élastiques, orientés par rapport à la direction circonférentielle avec un angle supérieur à 8° et de même sens que l'angle formé par les éléments de renforcement de la couche de travail qui lui est radialement adjacente. De préférence encore, les éléments de renforcements d'une telle couche de protection sont parallèles aux éléments de renforcement de la couche de travail qui lui est radialement adjacente.

D'autres variantes peuvent encore prévoir que l'armature de sommet peut être complétée entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse. Avantageusement, ladite couche de triangulation est constituée de deux demi-couches positionnées axialement de part et d'autre du plan médian circonférentiel.

D'autres détails et caractéristiques avantageux de l'invention ressortiront ci-après de la description d'un exemple de réalisation de l'invention en référence à la figure qui représente une vue méridienne d'un schéma d'un pneumatique selon un mode de réalisation de l'invention.

La figure n'est pas représentée à l'échelle pour en simplifier la compréhension. La figure ne représentent qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 315/70 R 22.5, a un rapport de forme H/L égal à 0,70, H étant la hauteur du pneumatique 1 sur sa jante de montage et L sa largeur axiale maximale. Ledit pneumatique 1 comprend une armature de carcasse radiale 2 ancrée dans deux bourrelets, non représentés sur la figure. L'armature de carcasse 2 est formée d'une seule couche de câbles métalliques. Ils comportent encore une bande de roulement 5.

Sur la figure, l'armature de carcasse 2 est frettée conformément à l'invention par une armature de sommet 4, formée radialement de l'intérieur à l'extérieur :

- d'une première couche de travail 41 formée de câbles métalliques orientés d'un angle égal à 16°,

- D'une couche d'éléments de renforcement circonférentiels 43 formée de câbles métalliques en acier 21x23, de type "bi-module",

- d'une deuxième couche de travail 42 formée de câbles métalliques orientés d'un angle égal à 50° et croisés avec les câbles métalliques de la première couche de travail 41, les câbles de chacune des couches de travail 41, 42 étant orientés de part et d'autre de la direction circonférentielle.

Les câbles métalliques constituant les éléments de renforcement des deux couches de travail sont des câbles de formule 9.35. Ils sont répartis dans chacune des couches de travail avec une distance entre les éléments de renforcement, mesurée selon la normale à la direction de la ligne moyenne du câble égale à 2.5 mm.

Les câbles métalliques constituant les éléments de renforcement de la couche d'éléments de renforcement circonférentiels sont distants les uns des autres de 2 mm, selon la normale à la direction de la ligne moyenne des câbles.

Le pneumatique est gonflé à une pression de 9 bars.

La largeur axiale $L_{41}$ de la première couche de travail 41 est égale à 251 mm.

La largeur axiale $L_{42}$ de la deuxième couche de travail 42 est égale à 232 mm.

La largeur axiale $L_{43}$ de la couche d'éléments de renforcement circonférentiels 43 est égale à 194 mm.

La largeur axiale de la bande de roulement $L_5$ est égale à 256 mm.

La largeur axiale L est égale à 316 mm.

La masse cumulée des deux couches de travail 41, 42 et de la couche d'éléments de renforcement circonférentiels 43, comprenant la masse des câbles métalliques et des mélanges de calandrage, se monte ainsi à 8.6 Kg.

La différence entre les angles formés par les câbles de la première couche de sommet de travail avec la direction circonférentielle et ceux des câbles de la deuxième couche de sommet de travail est égale à 34°.

L'angle moyen est égal à 30.3° et est bien compris entre 19.6° et 32.7°.

La valeur mesurée de Re est égale à 507.0 mm.

La valeur mesurée de Es est égale à 24.9 mm.

La valeur moyenne RL des rayons mesurés est égale à 395.0 mm.

La valeur Rt déterminée sur le pneumatique est égale à 2100 mm.

La valeur calculée de Tc est égale à 325.7 N/mm.

La valeur calculée de C est égale à -0.06.

La valeur de F1 est égale à 660.9 N.

La valeur de F2 est égale à 332.8 N.

Les forces ruptures des éléments de renforcement des couches de sommet de travail FR1 et FR2 sont égales à 2600 N.

Le ratio d'utilisation du potentiel de rupture F2/FR2 est égal à 12.8 %.

Le ratio d'utilisation du potentiel de rupture F1/FR1 est égal à 25.4 %.

Le ratio d'utilisation du potentiel de rupture F1/FR1 est 99 % supérieur au ratio d'utilisation du potentiel de rupture F2/FR2.

Le pneumatique selon l'invention est comparé à un pneumatique de référence de même dimension qui diffère du pneumatique selon l'invention par son armature de sommet formée radialement de l'intérieur à l'extérieur :

- d'une première couche de travail formée de câbles métalliques orientés d'un angle égal à 18°,

- d'une couche d'éléments de renforcement circonférentiels formée de câbles métalliques en acier 21x23, de type "bi-module",

- d'une seconde couche de travail formée de câbles métalliques orientés d'un angle égal à 18° et croisés aux câbles métalliques de la première couche de travail, les câbles de chacune des couches de travail étant orientés de part et d'autre de la direction circonférentielle,

- d'une couche de protection formées de câbles métalliques élastiques 6.35, dont la distance entre les éléments de renforcement, mesurée selon la normale à la direction de la ligne moyenne du câble est égal à 2.5 mm, orientés d'un angle égal à 18°, du même côté que les câbles de la seconde couche de travail.

Les câbles métalliques constituant les éléments de renforcement des deux couches de travail sont des câbles de formule 9.35. Ils sont répartis dans chacune des couches de travail avec une distance entre les éléments de renforcement, mesurée selon la normale à la direction de la ligne moyenne du câble égale à 2.5 mm. Les deux couches de sommet de travail ne diffèrent donc des couches de sommet de travail du pneumatique selon l'invention que par les angles.

Les câbles métalliques constituant les éléments de renforcement de la couche d'éléments de renforcement circonférentiels sont distants les uns des autres de 2 mm, selon la normale à la direction de la ligne moyenne des câbles.

Le pneumatique de référence est gonflé à une pression de 9 bars.

La largeur axiale de la première couche de travail est égale à 251 mm.

La largeur axiale de la couche d'éléments de renforcement circonférentiels est égale à 194 mm.

La largeur axiale de la deuxième couche de travail est égale à 232 mm.

La largeur axiale de la couche de protection est égale à 188 mm.

La masse cumulée des couches de travail du pneumatique de référence, de la couche d'éléments de renforcement circonférentiels, de la couche de protection, comprenant la masse des câbles métalliques et des mélanges de calandrage, se monte à 11.5 Kg.

La valeur absolue de la différence entre les valeurs absolues des angles formés par les câbles de la première couche de sommet de travail avec la direction circonférentielle et ceux des câbles de la deuxième couche de sommet de travail est nulle, les angles étant identiques, contrairement à l'invention.

L'angle moyen est égal 18° et n'est pas compris entre 19.6° et 32.7°.

La valeur mesurée de Re est égale à 506.5 mm.

La valeur mesurée de Es est égale à 24.9 mm.

La valeur moyenne RL des rayons mesurés est égale à 395.0 mm.

La valeur Rt déterminée sur le pneumatique est égale à 2500 mm.

La valeur calculée de Tc est égale à 327.4 N/mm.

La valeur calculée de C est égale à 0.

La valeur de F1 est égale à 452.5 N.

La valeur de F2 est égale à 452.5 N.

Les forces ruptures des éléments de renforcement des couches de sommet de travail FR1 et FR2 sont égales à 2600 N.

Le ratio d'utilisation du potentiel de rupture F2/FR2 est égal à 17.4 %.

Le ratio d'utilisation du potentiel de rupture F1/FR1 est égal à 17.4 %.

Le ratio d'utilisation du potentiel de rupture F1/FR1 est identique au ratio d'utilisation du potentiel de rupture F2/FR2.

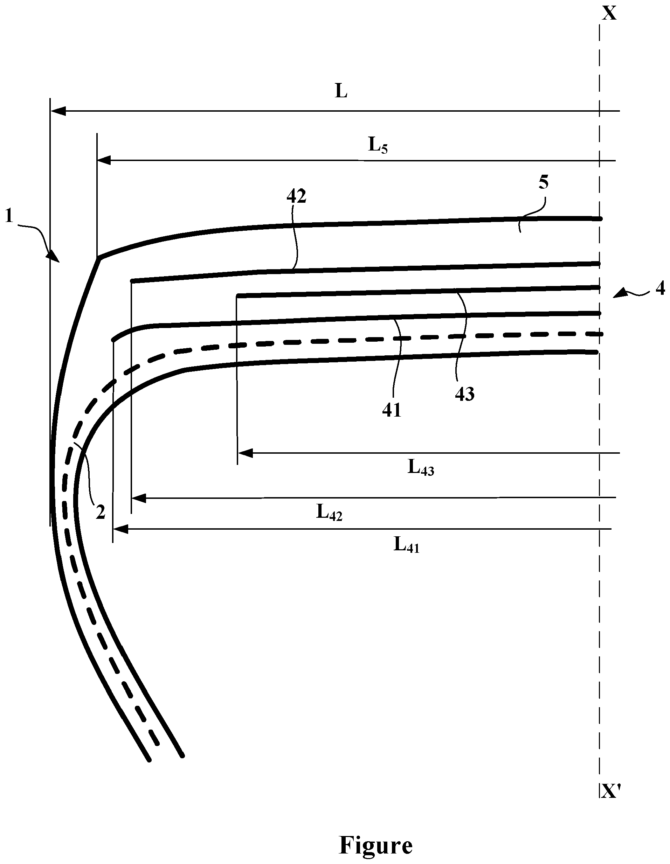

Des essais ont été réalisés avec des pneumatiques réalisés selon l'invention conformément à la figure 1 et avec le pneumatique de référence.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance à celles des pneumatiques de référence lors de roulage sur des sols bitumineux.

Des tests visant à caractériser la résistance à la rupture d'une armature de sommet de pneumatique soumise à des chocs ont également été réalisés. Ces tests consistent à faire rouler un pneumatique, gonflé à une pression recommandée et soumis à une charge recommandée, sur un obstacle ou indenteur cylindrique de diamètre égal à 1.5 pouce, soit 38.1 mm, et d'une hauteur déterminée. La résistance à la rupture est caractérisée par la hauteur critique de l'indenteur, c'est-à-dire la hauteur maximale de l'indenteur entraînant une rupture totale de l'armature de sommet, c'est-à-dire de la rupture de toutes les couches de sommet. Les valeurs expriment l'énergie nécessaire pour obtenir la rupture du bloc sommet. Les valeurs sont exprimées à partir d'une base 100 correspondant à la valeur mesurée pour le pneumatique de référence.

| Référence | 100 |
|---|---|
| Invention | 157 |

Ces résultats montrent que malgré un allégement du pneumatique par une diminution de la masse de son armature sommet, l'énergie à rupture lors d'un choc sur la surface de la bande de roulement est significativement supérieure.

**Revendications**

**1.** Pneumatique (1) pour véhicule de type poids lourd, dont la pression de gonflage P est supérieure ou égale à 6.5 bars, à armature de carcasse (2) radiale, comprenant une armature de sommet (4) comprenant deux couches de sommet de travail (41, 42) d'éléments de renforcement croisés d'une nappe à l'autre en faisant avec la direction circonférentielle des angles ($\alpha$1, $\alpha$2) supérieurs à 8°, lesdits angles $\alpha$1 et $\alpha$2 étant orientés de part et d'autre de la direction circonférentielle et au moins une couche (43) d'éléments de renforcement circonférentiels, l'armature sommet (4) étant coiffée radialement d'une bande de roulement (5), ladite bande de roulement étant réunie à deux bourrelets par l'intermédiaire de deux flancs, au plus lesdites deux couches de sommet de travail (41, 42) et ladite au moins une couche (43) d'éléments de renforcement circonférentiels étant seules présentes pour constituer l'armature de sommet (4) sur au moins 40% de la largeur axiale de l'armature sommet, que les éléments de renforcement de la couche de travail radialement la plus extérieure (42) formant un angle $\alpha$2 avec la direction circonférentielle supérieur en valeur absolue à l'angle $\alpha$1 formé par les éléments de renforcement de la couche de travail radialement la plus intérieure (41) avec la direction circonférentielle, la valeur absolue de la différence entre les valeurs absolues des angles $\alpha$2 et $\alpha$1 étant supérieure à 12°, **caractérisé en ce que** l'angle moyen $\alpha$ satisfait la relation :

$$14+131*\exp(-L/100) < \alpha < 28+110*\exp(-L/100),$$

$\alpha$ étant défini par la relation $\mathrm{Arctan}((\tan(|\alpha1|)*\tan(|\alpha2|))^{1/2})$, L étant la largeur maximum du pneumatique mesurée selon la direction axiale et exprimée en mm, **en ce que** le ratio d'utilisation du potentiel de rupture F2/FR2 de la couche de travail radialement la plus extérieure (42) est inférieur à 1/6, dans lequel :

FR2 est la force rupture en extension uniaxiale des câbles de la couche de travail radialement la plus extérieure (42),

$$F2 = p_2 * Tc * [(\tan(|\alpha1|)/((\tan(|\alpha1|)+\tan(|\alpha2|))) / \cos^2(|\alpha2|) + C],$$

avec

$$Tc = 0.078 * P * Rs * (\ 1-(Rs^2-R_L^2)/(2*Rt*Rs)\ ),$$

$$C = 0.00035*(\min((L-80) / \sin(|\alpha1|), (L-80) / \sin(|\alpha2|), 480)-480),$$

$p_2$ : le pas de pose des éléments de renforcement de la couche de sommet de travail radialement la plus extérieure (42), mesuré perpendiculairement aux éléments de renforcement au niveau du plan médian circonférentiel,

$$Rs = Re - Es,$$

Re : rayon extérieur du pneumatique mesuré au point radialement le plus extérieur sur la surface de la bande de roulement (5) du pneumatique, ladite surface étant extrapolée pour combler les éventuels creux,
Es : distance radiale entre le point radialement le plus à l'extérieur du pneumatique et sa projection orthogonale sur la face radialement extérieure d'un élément de renforcement de la couche de sommet de travail radialement la plus intérieure,
RL : moyenne des rayons des points axialement les plus à l'extérieur de chaque côté du pneumatique,
Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur ($L_5$) de la bande de roulement (5).

2. Pneumatique selon la revendication 1, **caractérisé en ce que** ladite au moins une couche d'éléments de renforcement circonférentiels est continue axialement et de préférence centrée sur le plan médian circonférentiel.

3. Pneumatique selon la revendication 1 ou 2, **caractérisé en ce que** les éléments de renforcement desdites deux couches de sommet de travail sont métalliques.

4. Pneumatique selon l'une des revendications 1 à 3, **caractérisé en ce que** la valeur absolue de la différence entre les valeurs absolues des angles $\alpha$2 et $\alpha$1 est supérieure à 15°.

**5.** Pneumatique selon l'une des revendications 1 à 4, **caractérisé en ce que** l'angle moyen α satisfait la relation :

$$\alpha > 20 + 164 * \exp(-L/100).$$

**6.** Pneumatique selon l'une des revendications 1 à 5, **caractérisé en ce que** le ratio d'utilisation du potentiel de rupture F2/FR2 de la couche de travail radialement la plus extérieure (42) est inférieur à 1/8.

**7.** Pneumatique selon l'une des revendications 1 à 6, **caractérisé en ce que** le ratio d'utilisation du potentiel de rupture F1/FR1 de la couche de travail radialement la plus intérieure (41) est inférieur à 1/3, dans lequel :

$$F1 = p_1 * Tc * [(\tan(|\alpha2|)/((\tan(|\alpha1|)+\tan(|\alpha2|))) / \cos^2(|\alpha1|) + C],$$

avec $p_1$ : le pas de pose des éléments de renforcement de la couche de sommet de travail radialement la plus intérieure (41), mesuré perpendiculairement aux éléments de renforcement au niveau du plan médian circonférentiel.

**8.** Pneumatique selon la revendication 7, **caractérisé en ce que** le ratio d'utilisation du potentiel de rupture F1/FR1 de la couche de travail radialement la plus intérieure (41) est au moins 30 % supérieur au ratio d'utilisation du potentiel de rupture F2/FR2 de la couche de travail radialement la plus extérieure (42).

**9.** Pneumatique selon l'une des revendications précédentes, **caractérisé en ce qu'**au plus lesdites deux couches de sommet de travail et ladite au moins une couche d'éléments de renforcement circonférentiels sont seules présentes pour constituer l'armature de sommet sur au moins 60% de la largeur axiale de l'armature sommet, et de préférence sur au moins 80% de la largeur axiale de l'armature sommet.

**10.** Pneumatique selon l'une des revendications précédentes, **caractérisé en ce que** les deux couches de sommet de travail et ladite au moins une couche (43) d'éléments de renforcement circonférentiels sont seules présentes pour constituer l'armature de sommet sur la totalité de la largeur axiale de l'armature sommet.

**11.** Pneumatique selon l'une des revendications précédentes, **caractérisé en ce que** les éléments de renforcement des couches de sommet de travail sont des câbles métalliques inextensibles.

**12.** Pneumatique selon l'une des revendications précédentes, **caractérisé en ce que** ladite au moins une couche (43) d'éléments de renforcement circonférentiels est radialement disposée entre les deux couches de sommet de travail.

**13.** Pneumatique selon l'une des revendications précédentes, au moins deux couches de sommet de travail présentant des largeurs axiales différentes, **caractérisé en ce que** la différence entre la largeur axiale de la couche de sommet de travail axialement la plus large et la largeur axiale de la couche de sommet de travail axialement la moins large est comprise entre 10 et 30 mm.

**14.** Pneumatique selon la revendication 13, **caractérisé en ce que** la couche de sommet de travail axialement la plus large est radialement à l'intérieur des autres couches de sommet de travail.

**15.** Pneumatique selon l'une des revendications précédentes, **caractérisé en ce que** les largeurs axiales des couches de sommet de travail radialement adjacentes à ladite au moins une couche d'éléments de renforcement circonférentiels sont supérieures à la largeur axiale de ladite au moins une couche (43) d'éléments de renforcement circonférentiels.

**Patentansprüche**

**1.** Reifen (1) für ein Schwerlastfahrzeug, dessen Fülldruck P größer oder gleich 6,5 bar ist, mit radialer Karkassenbewehrung (2), welcher eine Scheitelbewehrung (4) umfasst, die zwei Arbeitsscheitelschichten (41, 42) von Verstärkungselementen, die sich von einer Lage zur anderen überkreuzen und dabei mit der Umfangsrichtung Winkel (α1, α2) bilden, die größer als 8° sind, wobei die Winkel α1 und α2 beiderseits der Umfangsrichtung ausgerichtet sind, und wenigstens eine Schicht (43) von umlaufenden Verstärkungselementen umfasst, wobei die Scheitelbewehrung (4) radial von einem Laufstreifen (5) bedeckt ist, wobei der Laufstreifen über zwei Seitenwände mit zwei Wülsten verbunden ist, wobei auf wenigstens 40 % der axialen Breite der Scheitelbewehrung höchstens die zwei Arbeitsscheitelschichten (41, 42) und die wenigstens eine Schicht (43) von umlaufenden Verstärkungselementen allein vorhanden sind, um die Scheitelbewehrung (4) zu bilden, wobei die Verstärkungselemente der radial äußersten Arbeitsschicht (42) einen Winkel $\alpha 2$ mit der Umfangsrichtung bilden, der dem absoluten Betrag nach größer als der Winkel $\alpha 1$ ist, der von den Verstärkungselementen der radial innersten Arbeitsschicht (41) mit der Umfangsrichtung gebildet wird, wobei der absolute Betrag der Differenz zwischen den absoluten Beträgen der Winkel $\alpha 2$ und $\alpha 1$ größer als 12° ist,
**dadurch gekennzeichnet, dass** der mittlere Winkel $\alpha$ die Beziehung

$$14+131*\exp(-L/100) \;<\; \alpha \;<\; 28+110*\exp(-L/100)$$

erfüllt, wobei $\alpha$ durch die Beziehung Arctan $((\tan(|\alpha 1|)*\tan(|\alpha 2|))^{1/2}$ definiert ist, wobei L die in der axialen Richtung gemessene und in mm ausgedrückte maximale Breite des Reifens ist, dadurch, dass der Ausschöpfungsgrad des Bruchpotentials F2/FR2 der radial äußersten Arbeitsschicht (42) kleiner als 1/6 ist, wobei:
FR2 die Reißkraft bei uniaxialer Dehnung der Seile der radial äußersten Arbeitsschicht (42) ist,

$$F2 = p_2 * Tc$$
$$* \;[(\tan(|\alpha 1|)/((\tan(|\alpha 1|)+\tan(|\alpha 2|)))/\cos^2(|\alpha 2|) \;+\; C],$$

mit

$$Tc = 0,078 * P * Rs * (1-(Rs^2-RL^2)/(2*Rt*Rs)),$$

$$C = 0,00035*(\min((L-80)/\sin(|\alpha 1|), \;(L-80)/\sin(|\alpha 2|),$$
$$480)-480),$$

$p_2$: Schrittweite der Anbringung der Verstärkungselemente der radial äußersten Arbeitsscheitelschicht (42), senkrecht zu den Verstärkungselementen an der äquatorialen Mittelebene gemessen,

$$Rs = Re - Es,$$

Re: äußerer Radius des Reifens, am radial äußersten Punkt auf der Oberfläche des Laufstreifens (5) des Reifens gemessen, mit Extrapolation der Oberfläche, um die eventuellen Hohlräume zu füllen,
Es: radialer Abstand zwischen dem radial äußersten Punkt des Reifens und seiner orthogonalen Projektion auf die radial äußere Fläche eines Verstärkungselements der radial innersten Arbeitsscheitelschicht,
RL: Mittelwert der Radien der axial äußersten Punkte jeder Seite des Reifens,
Rt: Radius des Kreises, der durch drei Punkte verläuft, die sich auf der Außenfläche des Laufstreifens außerhalb der Hohlräume befinden und ausgehend von einem Schulterende in axialen Abständen definiert sind, die ¼, ½ bzw. ¾ der Breite ($L_5$) des Laufstreifens (5) betragen.

2. Reifen nach Anspruch 1, **dadurch gekennzeichnet, dass** die wenigstens eine Schicht von umlaufenden Verstärkungselementen axial durchgehend und vorzugsweise auf der äquatorialen Mittelebene zentriert ist.

3. Reifen nach Anspruch 1 oder 2, **dadurch gekennzeichnet, dass** die Verstärkungselemente der zwei Arbeitsscheitelschichten metallisch sind.

4. Reifen nach einem der Ansprüche 1 bis 3, **dadurch gekennzeichnet, dass** der absolute Betrag der Differenz zwischen den absoluten Beträgen der Winkel $\alpha 2$ und $\alpha 1$ größer als 15° ist.

5. Reifen nach einem der Ansprüche 1 bis 4, **dadurch gekennzeichnet, dass** der mittlere Winkel $\alpha$ die Beziehung

$$\alpha > 20 + 164*\exp(-L/100)$$

erfüllt.

**6.** Reifen nach einem der Ansprüche 1 bis 5, **dadurch gekennzeichnet, dass** der Ausschöpfungsgrad des Bruchpotentials F2/FR2 der radial äußersten Arbeitsschicht (42) kleiner als 1/8 ist.

**7.** Reifen nach einem der Ansprüche 1 bis 6, **dadurch gekennzeichnet, dass** der Ausschöpfungsgrad des Bruchpotentials F1/FR1 der radial innersten Arbeitsschicht (41) kleiner als 1/3 ist, wobei:

$$F1 = p_1 * Tc$$
$$* [(\tan(|\alpha2|)/((\tan(|\alpha1|)+\tan(|\alpha2|)))/\cos^2(|\alpha1|) + C],$$

mit
$p_1$: Schrittweite der Anbringung der Verstärkungselemente der radial innersten Arbeitsscheitelschicht (41), senkrecht zu den Verstärkungselementen an der äquatorialen Mittelebene gemessen.

**8.** Reifen nach Anspruch 7, **dadurch gekennzeichnet, dass** der Ausschöpfungsgrad des Bruchpotentials F1/FR1 der radial innersten Arbeitsschicht (41) um wenigstens 30 % größer als der Ausschöpfungsgrad des Bruchpotentials F2/FR2 der radial äußersten Arbeitsschicht (42) ist.

**9.** Reifen nach einem der vorhergehenden Ansprüche, **dadurch gekennzeichnet, dass** auf wenigstens 60 % der axialen Breite der Scheitelbewehrung und vorzugsweise auf wenigstens 80 % der axialen Breite der Scheitelbewehrung höchstens die zwei Arbeitsscheitelschichten und die wenigstens eine Schicht von umlaufenden Verstärkungselementen allein vorhanden sind, um die Scheitelbewehrung zu bilden.

**10.** Reifen nach einem der vorhergehenden Ansprüche, **dadurch gekennzeichnet, dass** auf der gesamten axialen Breite der Scheitelbewehrung die zwei Arbeitsscheitelschichten und die wenigstens eine Schicht (43) von umlaufenden Verstärkungselementen allein vorhanden sind, um die Scheitelbewehrung zu bilden.

**11.** Reifen nach einem der vorhergehenden Ansprüche, **dadurch gekennzeichnet, dass** die Verstärkungselemente der Arbeitsscheitelschichten nicht dehnbare Metallseile sind.

**12.** Reifen nach einem der vorhergehenden Ansprüche, **dadurch gekennzeichnet, dass** die wenigstens eine Schicht (43) von umlaufenden Verstärkungselementen radial zwischen den zwei Arbeitsscheitelschichten angeordnet ist.

**13.** Reifen nach einem der vorhergehenden Ansprüche, wobei wenigstens zwei Arbeitsscheitelschichten verschiedene axiale Breiten aufweisen, **dadurch gekennzeichnet, dass** die Differenz zwischen der axialen Breite der axial breitesten Arbeitsscheitelschicht und der axialen Breite der axial am wenigsten breiten Arbeitsscheitelschicht zwischen 10 und 30 mm beträgt.

**14.** Reifen nach Anspruch 13, **dadurch gekennzeichnet, dass** sich die axial breiteste Arbeitsscheitelschicht radial innerhalb der anderen Arbeitsscheitelschichten befindet.

**15.** Reifen nach einem der vorhergehenden Ansprüche, **dadurch gekennzeichnet, dass** die axialen Breiten der Arbeitsscheitelschichten, die der wenigstens einen Schicht von umlaufenden Verstärkungselementen radial benachbart sind, größer als die axiale Breite der wenigstens einen Schicht (43) von umlaufenden Verstärkungselementen sind.

**Claims**

**1.** Tyre (1) for a heavy duty vehicle, the inflation pressure P of which is greater than or equal to 6.5 bar, with a radial carcass reinforcement (2), comprising a crown reinforcement (4) comprising two working crown layers (41, 42) of reinforcing elements which are crossed from one ply to the other, making with the circumferential direction angles

($\alpha$1, $\alpha$2) greater than 8°, the said angles $\alpha$1 and $\alpha$2 being oriented one on each side of the circumferential direction, and at least one layer (43) of circumferential reinforcing elements, the crown reinforcement (4) being capped radially by a tread (5), the said tread being connected to two beads via two sidewalls, at most the said two working crown layers (41, 42) and the said at least one layer (43) of circumferential reinforcing elements being the only ones present to form the crown reinforcement (4) over at least 40% of the axial width of the crown reinforcement, the reinforcing elements of the radially outermost working layer (42) forming an angle $\alpha$2 with the circumferential direction which is greater in terms of absolute value than the angle $\alpha$1 formed by the reinforcing elements of the radially innermost working layer (41) with the circumferential direction, the absolute value of the difference between the absolute values of the angles $\alpha$2 and $\alpha$1 being greater than 12°, **characterized in that** the mean angle $\alpha$ satisfies the relationship:

$$14+131*\exp(-L/100) < \alpha < 28+110*\exp(-L/100)$$

$\alpha$ being defined by the relationship $\mathrm{Arctan}((\tan(|\alpha 1|)*\tan(|\alpha 2|))^{1/2})$, L being the maximum width of the tyre measured in the axial direction and expressed in mm, **in that** the rupture potential index F2/FR2 of the radially outermost working layer (42) is less than 1/6, in which:

FR2 is the breaking force in uni-axial extension of the cords of the radially outermost working layer (42),

$$F2 = p_2 * Tc * [(\tan(|\alpha 1|)/(\tan(|\alpha 1|)+\tan(|\alpha 2|)))/\cos^2(|\alpha 2|) + C],$$

where

$$Tc = 0.078 * P * Rs * (1-(Rs^2-R_L{}^2)/(2*Rt*Rs)),$$

$$C = 0.00035*(\min((L-80)/\sin(|\alpha 1|), (L-80)/\sin(|\alpha 2|), 480)-480),$$

$p_2$ is the pitch at which the reinforcing elements of the radially outermost working crown layer (42) are laid, measured perpendicular to the reinforcing elements at the circumferential median plane,

$$Rs = Re - Es,$$

Re is the external radius of the tyre, measured at the radially outermost point on the tread surface of the tyre, the said surface being extrapolated in order to fill any voids there might be,
Es is the radial distance between the radially outermost point of the tyre and the orthogonal projection thereof onto the radially exterior face of a reinforcing element of the radially innermost working crown layer,
RL is the mean of the radii of the axially outermost points on each side of the tyre,
Rt is the radius of the circle passing through three points situated on the exterior surface of the tread outside of the voids, defined from a shoulder end at respective axial distances equal to ¼, ½ and ¾ of the width (L$_5$) of the tread (5).

2. Tyre according to Claim 1, **characterized in that** the said at least one layer of circumferential reinforcing elements is axially continuous and preferably centred on the circumferential median plane.

3. Tyre according to Claim 1 or 2, **characterized in that** the reinforcing elements of the said two working crown layers are made of metal.

4. Tyre according to one of Claims 1 to 3, **characterized in that** the absolute value of the difference between the absolute values of the angles $\alpha$1 and $\alpha$2 is greater than 15°.

5. Tyre according to one of Claims 1 to 4, **characterized in that** the mean angle $\alpha$ satisfies the relationship:

$$\alpha > 20+164*\exp(-L/100).$$

6. Tyre according to one of Claims 1 to 5, **characterized in that** the rupture potential index F2/FR2 of the radially outermost working layer (42) is less than 1/8.

7. Tyre according to one of Claims 1 to 6, **characterized in that** the rupture potential index F1/FR1 of the radially innermost working layer (41) is less than 1/3, in which:

$$F1 = p_1 * Tc * [(\tan(|\alpha2|)/(\tan(|\alpha1|)+\tan(|\alpha2|))) / \cos^2(|\alpha1|) + C],$$

where $p_1$ is the pitch at which the reinforcing elements of the radially innermost working crown layer (41) are laid, measured perpendicular to the reinforcing elements at the circumferential median plane.

8. Tyre according to Claim 7, **characterized in that** the rupture potential index F1/FR1 of the radially innermost working layer (41) is at least 30% higher than the rupture potential index F2/FR2 of the radially outermost working layer (42).

9. Tyre according to one of the preceding claims, **characterized in that,** at most the said two working crown layers and the said at least one layer of circumferential reinforcing elements are the only ones present to form the crown reinforcement over at least 60% of the axial width of the crown reinforcement and preferably over at least 80% of the axial width of the crown reinforcement.

10. Tyre according to one of the preceding claims, **characterized in that** the two working crown layers and the said at least one layer (43) of circumferential reinforcing elements are the only ones present to form the crown reinforcement over the entirety of the axial width of the crown reinforcement.

11. Tyre according to one of the preceding claims, **characterized in that** the reinforcing elements of the working crown layers are inextensible metal cords.

12. Tyre according to one of the preceding claims, **characterized in that** the said at least one layer (43) of circumferential reinforcing elements is radially arranged between the two working crown layers.

13. Tyre according to one of the preceding claims, at least two working crown layers having different axial widths, **characterized in that** the difference between the axial width of the axially widest working crown layer and the axial width of the axially least wide working crown layer is between 10 and 30 mm.

14. Tyre according to Claim 13, **characterized in that** the axially widest working crown layer lies radially inside the other working crown layers.

15. Tyre according to one of the preceding claims, **characterized in that** the axial widths of the working crown layers radially adjacent to the said at least one layer of circumferential reinforcing elements are greater than the axial width of the said at least one layer (43) of circumferential reinforcing elements.

**Figure**

## RÉFÉRENCES CITÉES DANS LA DESCRIPTION

**Documents brevets cités dans la description**

- FR 2728510
- WO 9924269 A
- DE 102010000471 A1